# EUROPEAN PATENT APPLICATION

(11) **EP 2 735 555 A1**
(43) Date of publication of application: **28.05.2014**
(21) Application number: 12306469.3
(22) Date of filing: 27.11.2012
(51) Int. Cl.: C04B 28/10, C01B 33/20, C04B 9/00

(54) **Hydraulic binders**

(71) Applicant: LAFARGE, 75116 Paris (FR)
(72) Inventor: Gartner, Ellis, 38291 Saint Quentin Fallavier (FR); Pisch, Alexander, 38291 Saint Quentin Fallavier (FR)
(74) Representative: Mérigeault, Shona

(57) **Abstract**

The invention provides a hydraulic binder and hydraulic compositions comprising an alkali metal magnesium orthosilicate.

## Description

This invention relates to new hydraulic binders produced using an alkali metal magnesium orthosilicate.

A hydraulic binder is a binder which sets and hardens by chemical interaction with water and is capable of doing so under water. The binder is capable of holding solid materials together in a coherent mass, for example in a mortar or concrete.

Magnesium silicate rocks make up the majority of the Earth's mantle, and large surface deposits of such rocks are also found in many locations. The composition of the Earth's mantle is about 70% basic magnesium orthosilicate (Mg₂SiO₄), and, when this material is found in crystalline form close to the Earth's surface, it is generally in the form of olivine, which is essentially a solid solution between forsterite (pure Mg₂SiO₄ and fayalite (pure Fe₂SiO₄), representing the two main components of the Earth's mantle. In the Earth's crust, in addition to olivine, anhydrous magnesium silicates also occur as pyroxenes, such as enstatite (MgSiO₃). Due to the action of water, either at the surface or at depth within the Earth's crust, anhydrous magnesium silicates are converted into magnesium silicate hydrate minerals such as serpentine or chlorite (with the idealised overall composition Mg₃Si₂O₅(OH)₄), and also talc (with the idealised overall composition (Mg₃Si₄O₁₀(OH)₂).

Magnesium silicate rocks constitute an excellent source of basic magnesium. Although the common magnesium silicate minerals listed above tend to be very "unreactive," (e.g. in that they have high melting points and also dissolve only very slowly in water or dilute acids), it is known that they will react rapidly with molten alkali metal carbonates, such as sodium carbonate (Na₂CO₃). Such a process, commonly referred to as a "carbonate fusion", is often used in the preparation of minerals for chemical analysis. Generally, a large excess of solid alkali metal carbonate (typically at least ten parts of alkali metal carbonate to one part of magnesium silicate rock) is added and the mixture heated to well above the melting point of the alkali metal carbonate. The magnesium silicate completely dissolves in the resulting melt, which after cooling can easily and rapidly be dissolved in a strong aqueous acid and the solution then analyzed by standard chemical techniques, thus allowing for total elemental analysis of the rock. The carbonate fusion process is a small scale process; it is analytical, not preparative, and is not energy-efficient as it involves melting a large excess of alkali metal carbonate in order to fully dissolve the magnesium silicate.

The term sodium magnesium silicate is sometimes used, in accordance with the International Nomenclature of Cosmetic Ingredients (INCI) to identify synthetic hectorites in the form of nanoparticles and which form clear gels in water. According to one manufacturer of such products hectorites have the formula (Mg_{5.2}Li_{0.8})(Si₈)O₂₀(OH)₄Na_{0.8}.

The present invention seeks to provide hydraulic binders and hydraulic compositions comprising an anhydrous alkali metal magnesium orthosilicate of the general formula R₂MgSiO₄ wherein R represents an alkali metal; and, preferably, either magnesium oxide or an alkali metal silicate (R₂SiO₃), which compositions absorb carbon dioxide.

The present invention accordingly provides a hydraulic binder comprising an alkali metal magnesium orthosilicate, and, preferably, magnesium oxide or an alkali metal silicate.

The alkali metal is preferably potassium or, more preferably, sodium.

The alkali metal magnesium orthosilicate is preferably prepared by the reaction of an alkali metal carbonate compound, which compound is an alkali metal carbonate, an alkali metal bicarbonate, or a mixture thereof, with a magnesium silicate.

It is believed that the hydraulic binders according to the invention set and harden when mixed with water due to hydration reactions which produce magnesium hydroxides (e.g. brucite) and magnesium silicate hydrate gels (M-S-H) as well as releasing alkali metal hydroxides and silicates into solution.

According to a further feature of the invention, when mixed with a concentrated (preferably > 3% w/w) aqueous solution of phosphoric acid or a water soluble phosphate salt (for example potassium dihydrogen phosphate) the hydraulic binder according to the invention produces a mixture which sets and hardens rapidly. Insoluble or sparingly soluble magnesium phosphate salts are formed. The invention provides a hydraulic composition according to the invention which also comprises a water soluble phosphate salt. Preferred such compositions comprise, on a dry solids basis, 0.1 to 70%, more preferably 1 to 40%, of water soluble phosphate salt.

The hydraulic binder according to the invention preferably has a Blaine specific surface area of at least 100m2/kg, more preferably 300 to 600m2/kg.

The hydraulic binder according to the invention preferably comprises an additive to promote setting and hardening.

Additives include nucleating agents. These are generally small particles which provide a surface on which hydration products involved in the hardening process may grow. Such nucleating agents include alkaline earth metal carbonates such as calcite, dolomite and hydromagnesite, as well as poorly-soluble inorganic oxides or hydroxides such as brucite and precipitated silica. The nucleating agents are preferably in fine particulate form.

Additives to promote hardening also comprise water-soluble chelating agents for magnesium. Preferred chelating agents chelate magnesium in a pH range of 10 to 14. Preferably about half of the chelating agent in solution is bound to magnesium ions.

Additives also include aluminium compounds. Such compounds include aluminosilicates, generally in X-ray amorphous particulate form. Examples of the aluminosilicate include for example, burnt clays (e.g. metakaolins); coal combustion ashes (e.g. fly ash); and metallurgical slags (e.g. granulated blast-furnace slags).

The aluminium compounds also include aluminium hydroxide and sources thereof, for example water-soluble aluminium salts which precipitate aluminium hydroxide under basic conditions. Such salts include aluminium sulphate, chloride and nitrate.

It is believed that the inclusion of such aluminium compounds promotes and/or accelerates the hydration reactions in the hydraulic binders according to the invention, and also leads to the production of additional solid hydrates such as, for example, hydrotalcites (magnesium aluminate layered-double-hydroxides), alkali alumino-silicate gels and/or calcium alumino-silicate gels, thus resulting in an accelerated hardening process and stronger hardened products.

According to a feature of the invention the hydraulic binder according to the invention also comprises a calcium aluminate or sulfoaluminate hydraulic binder. Such hydraulic binders include, for example, hydraulic binders comprising mono-calcium aluminate (CaAl₂O₄) or calcium sulfoaluminate (ye'elimite, Ca₄Al₆O₁₂(SO₄)). The inclusion of a calcium aluminate or sulfoaluminate hydraulic binder can give hydraulic binders with enhanced strength development properties compared to hydraulic binders obtained by mixing the same mono-calcium aluminate or calcium sulfoaluminate hydraulic binder in the same proportions with an inert powder such as quartz.

Additives to promote hardening also include compounds which provide soluble anions, for example chlorides, nitrates, sulphates and carbonates. Such anions can be beneficial by accelerating the dissolution of anhydrous phases and the growth of hydrates.

According to a feature of the invention the hydraulic binders according to the invention described above also comprise a Portland cement. Such Portland cements include those listed in the EN 197-1 Standard, for example CEM I (comprising substantially pure cement clinker), Portland slag cement, Portland fly ash cement, and blast furnace cement (CEM III).

When the hydraulic binders according to the invention are used the water/solid hydraulic binder ratio is generally from 0.1 to 10, preferably 0.2 to 1, by mass.

The invention also relates to a hydraulic composition comprising a hydraulic binder according to the present invention. Such compositions generally comprise fine aggregate and/or coarse aggregate.

The hydraulic composition may also comprise a particulate inorganic, e.g. mineral, material, for example calcium carbonate, e.g. limestone or dolomite, or silica, e.g. quartz or silica fume.

Preferably, the hydraulic composition according to the present invention is a hydraulic slurry, a mortar or a concrete.

The hydraulic composition according to the invention preferably comprises a superplasticizer. The superplasticizer generally acts as a dispersant.

The term "superplasticizer" as used in this specification and the accompanying claims is to be understood as including both water reducers and superplasticizers as described in the Concrete Admixtures Handbook, Properties Science and Technology, V.S. Ramachandran, Noyes Publications, 1984.

A water reducer is defined as an additive which reduces the amount of mixing water of concrete for a given workability by typically 10 - 15%. Water reducers include, for example lignosulphonates, hydroxycarboxylic acids, carbohydrates, and other specialized organic compounds, for example glycerol, polyvinyl alcohol, sodium alumino-methyl-siliconate, sulfanilic acid and casein.

Superplasticizers are a class of organic polymer based water reducers capable of reducing the water contents of hydraulic binders by over about 30% while maintaining a high workability. Common superplasticizers include sulphonated naphthalene formaldehyde condensates (SNF); sulphonated melamine formaldehyde condensates (SMF); modified lignosulfonates (MLS); and others. More recent types of superplasticizer include polycarboxylic compounds such as polyacrylates. The superplasticizer is preferably a new generation superplasticizer, for example a copolymer containing polyethylene glycol as graft chain and carboxylic functions in the main chain such as a polycarboxylic ether. Sodium polycarboxylate-polysulphonates and sodium polyacrylates may also be used. Phosphonic acid derivatives may also be used. The amount of superplasticizer required generally depends on the water demand of the hydraulic binder. The lower the water demand, the lower the amount of superplasticizer required. The superplasticizer may be used in acid form or as a sodium, potassium, calcium or magnesium salt.

Other additives may be included in the composition according to the invention, for example, a defoaming agent (e.g. polydimethylsiloxane). These also include silicones in the form of a solution, a solid or preferably in the form of a resin, an oil or an emulsion, preferably in water. More particularly suitable are silicones comprising R1SiO0.5 and (R12SiO) moieties.

In these formulae, the R1 radicals, which may be the same or different, are preferably hydrogen or an alkyl group of 1 to 8 carbon atoms, the methyl group being preferred. The number of moieties in each silicone molecule is preferably from 30 to 120.

The amount of such an agent in the final hydraulic binder is generally at most 5 parts in 100 parts by weight relative to the hydraulic binder.

The concrete according to the invention may be subjected to a cure to improve its mechanical properties. Curing may be effected under wet or dry conditions. Curing is generally conducted in humid air at a temperature at or above ambient temperature (e.g. 20°C to 90°C), preferably from 60°C to 90°C. The curing temperature should be less than the boiling point of water at the ambient pressure; but autoclaving, in which curing is conducted in water vapour at elevated pressures, allows curing temperatures higher than 100°C to be used.

Curing may be conducted in the presence of carbon dioxide (preferably in gaseous form). Such curing is believed to promote carbonation of hydroxyl groups, which further increases the strength and durability of the hardened product. It may be effected using combustion flue gas, for example in a closed chamber.

Carbonation by absorption of carbon dioxide from the atmosphere will continue until all of the hydroxyl groups have been carbonated.

The cure time may be, for example, 3 hours to 7 days, preferably about 1 day. Curing may be started before or after setting.

The cure may be performed in dry or wet conditions or in cycles alternating both environments, for example, a 24 hour cure in a humid environment followed by a 24 hour cure in a dry environment.

The alkali metal magnesium orthosilicate of the hydraulic binder according to the invention is preferably prepared by a process which comprises the reaction, at a temperature from 500°C to 1200°C, of an alkali metal carbonate compound, which compound is an alkali metal carbonate, an alkali metal bicarbonate or a mixture thereof, with a magnesium silicate.

The molar ratio of alkali metal carbonate compound, expressed as alkali metal oxide, to magnesium silicate expressed as silicon dioxide is preferably from about 4:1 to 1:4, for example <4 :1 to 1:4, more preferably from 3:1 to 1:3, for example 2:1 to 1:2. The ratio is most preferably about 1:1.

The alkali metal carbonate compound is preferably an alkali metal carbonate. It will be understood that when the alkali metal carbonate compound comprises bicarbonate the latter will generally decompose to the corresponding carbonate at the temperatures used to prepare the alkali metal magnesium orthosilicate. The alkali metal carbonate compound may be anhydrous or hydrated. Hydrates of sodium carbonate include the monohydrate and decahydrate. Hydrates of potassium carbonate include the sesquihydrate (also known as hemihydrate). It is preferable, when economically feasible, to use anhydrous alkali metal carbonate compounds to avoid the expenditure of energy required to remove water of hydration.

Although the starting material used to prepare the alkali metal magnesium orthosilicate comprises magnesium silicate it may also comprise metals other than magnesium.

The magnesium silicate used in the preparation of the alkali metal magnesium orthosilicate is generally a mineral silicate, for example a rock comprising a high concentration, preferably 20% or more, more preferably 50% or more, of a magnesium silicate of the general composition:

m(MgO)•t(QO)•SiO₂•xH₂O

wherein Q represents a metal or metals other than magnesium, (for example calcium and/or a transition group metal such as iron, chromium or nickel); m is from 0.5 to 3, t is less than or equal to 1, and x is from zero to 2. It will be understood that the composition or formulae of minerals is often depicted in terms of the theoretical amount of oxides which they contain: the oxides are, however, not present as such in the minerals whose composition is depicted in this way.

Such minerals include olivines, e.g. forsterite and monticellite; serpentines, e.g. antigorite, chrysotile, lizardite, sepiolite and garnierite; pyroxenes, e.g. enstatite, diopside, bronzite and hypersthene; amphiboles, e.g. amosite, anthophyllite, tremolite and actinolite; humites, e.g. chondrodite and norbergite; and other minerals such as chlorite, talc, iddingsite and hectorite. These minerals may contain substantial quantities of iron in addition to magnesium and silicon, and also significant amounts of calcium, aluminium and alkali metals.

Asbestos comprises a group of naturally occurring minerals which includes fibrous serpentine (e.g. chrysotile) and amphibole (e.g. amosite, anthophyllite, tremolite and actinolite) minerals. The fibrillar forms of asbestos are known to be harmful to health and are considered to be human carcinogens. The process of the invention provides a means of converting these minerals into useful (and non-carcinogenic) materials.

The mineral silicate used to prepare the alkali metal magnesium orthosilicate is preferably a magnesium silicate. The MgO/SiO₂ molar ratio is preferably from 0.5 to 3, more preferably 0.65 to 2. The CaO/SiO₂ molar ratio is preferably ≤0.5. The FeO/SiO₂ molar ratio is preferably ≤0.5. The content of other elements in terms of the (total oxides)/SiO₂ molar ratio is preferably ≤0.2.

The alkali metal carbonate compound used in the preparation of the alkali metal magnesium orthosilicate may be a mineral, for example trona (tri-sodium hydrogen dicarbonate dihydrate; Na₃H(CO₃)₂•2H₂O), or a commercially available compound. It may contain impurities, for example hydroxides and silicates and, generally in smaller amounts, other impurities, e.g. chlorides, sulfates, sulfites, nitrates and nitrites. If impurities (e.g. alkali metal nitrates, nitrites or hydroxides) are present which, at the temperature used to prepare the alkali metal magnesium orthosilicate, decompose to an alkali metal oxide, they should be taken into account when calculating the amount of alkali metal oxide.

The process used to prepare the alkali metal magnesium orthosilicate is preferably effected at a temperature from 600 to 1100°C, more preferably from 800 to 1000°C. Heating is generally effected for a few minutes to a few hours.

The process is preferably effected at a temperature at which the magnesium silicate is solid and the alkali metal carbonate corresponding to the alkali metal carbonate compound is solid or liquid. The process may be effected at a temperature below the melting point of the alkali metal carbonate corresponding to the alkali metal compound, more preferably slightly below its melting point.

We have found, unexpectedly, that it is possible to obtain a high degree of reaction between an alkali metal carbonate compound, preferably an alkali metal carbonate, and a magnesium silicate when the two materials are contacted with each other in the solid state. They are preferably in particulate form, for example as powders. A mixture of the compounds is preferably heated, for example in a furnace, to a temperature close to, but below, the melting point of the alkali metal carbonate corresponding to the alkali metal compound. The ratio of the carbonate and silicate used is preferably substantially equal to the stoichiometric ratio calculated on the basis that one mole of alkali metal oxide (written generically as "R₂O" in which R represents an alkali metal) present in the alkali metal carbonate compound, is equivalent to one mole of silica (SiO₂) present in the magnesium silicate. For example, the stoichiometric mass ratio for the reaction between pure forsterite (Mg₂SiO₄, mol. wt. = 140) and pure anhydrous sodium carbonate (Na₂CO₃ mol. wt. = 106) would be 140:106. It will be understood that the actual silicate and carbonate sources used in practice will not always be pure, but the idealized stoichiometric ratio refers to that in which the heated mixture has an overall molar ratio of R₂O:SiO₂ substantially equal to unity.

The magnesium silicate and alkali metal carbonate compound used to prepare the alkali metal magnesium orthosilicate are preferably in particulate form or in shaped form, e.g. as pellets.

Rock used to provide the magnesium silicate and/or alkali metal carbonate compound for the preparation of the alkali metal magnesium orthosilicate will generally be dried, crushed and, if necessary, ground (for example co-ground) to a desired particle size distribution. For example the magnesium silicate may be crushed to the granulometry of fine sand (grain size 0.06 to 0.2mm) or, if necessary, ground to a fine powder (grain sizes below 0.06mm). Grain sizes greater than 0.06mm are generally determined by sieving. Grain sizes lower than 0.06mm are generally determined by laser granulometry. Undesirable mineral impurities can be separated to the extent consistent with energy efficiency by mechanical or other separation methods.

In one embodiment the process to prepare the alkali metal magnesium orthosilicate is conducted in a moving grate furnace. This procedure is especially suited to magnesium silicate rocks (rocks comprising mainly MgO and SiO₂) in which the MgO/ SiO₂ ratio is close to or greater than 1.

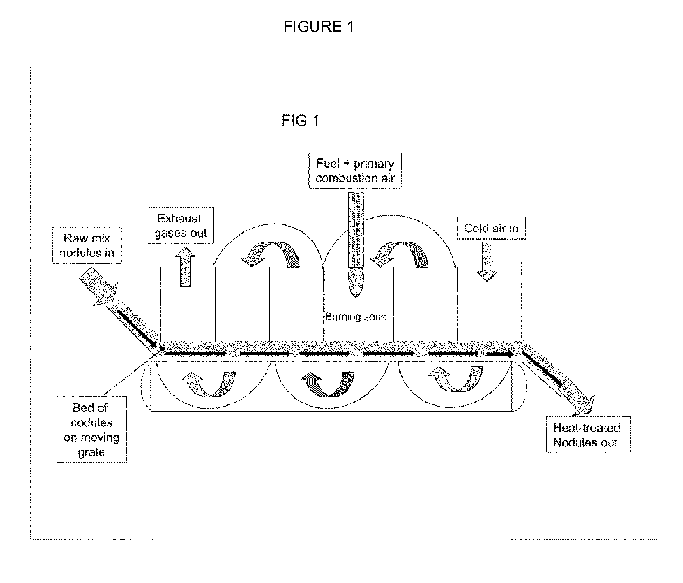

For example a mixture of alkali metal carbonate compound and magnesium silicate, each in particulate form, is formed into pellets (e.g. using a disc or drum pelletizer). Water may be added to the mixture to facilitate the pelletising process. The pellets are fed onto a moving grate comprising, for example, a high-temperature-resisting steel alloy, where they are heated, for example, by the passage of hot gases, for example fuel combustion gases. The hot gases may be drawn through the bed of pellets on the grate by fans, usually placed under the grate. The process is illustrated diagrammatically in Figure 1 of the accompanying drawings.

Typically, the hot gases are produced by burning, in an excess of air, a fossil fuel, such as natural gas, oil or coal; waste- or biomass-derived fuels, such as wood chips or waste fermentation gases, may also be used. Preferably the fuel used should have a low sulfur content, for example, <1%. The passage of hot gases through the bed heats the particles up, ultimately, to the desired temperature.

The rate of heating is controlled, for example, by varying the amount of fuel, the speed of the moving grate and/or the speed of the ventilation fans in order to ensure good overall energy efficiency and also to ensure that the pellets retain their mechanical integrity during the process. The moving grate is designed so that the gases may be passed through the bed several times along the length of the grate to allow for efficient heat transfer between the gases and the pellets, so that the gases leaving the furnace are as cool as possible. Moreover, once the pellets pass through the hottest zone ("burning zone") just after the combustion of the fuel, they are cooled by passing air through the bed, such that they reach as low a temperature as possible before being discharged from the bed. The incoming air, thus preheated by the outgoing solid particles, is used as the main air supply for combustion of fuel in the burning zone, thus leading to a high overall thermal efficiency for this type of furnace. The theoretical overall chemical reaction occurring during the heating process is shown below in equation (1a) for the reaction between forsterite (Mg₂SiO₄) and an alkali metal carbonate (R₂CO₃) in equimolar amounts:

(1a) Mg₂SiO₄ + R₂CO₃ ⇒ R₂MgSiO₄ + MgO + CO₂↑

in which R is as hereinbefore defined.

The more general form of this reaction can be written as in equation (1b) for m≥1 and equation (1 c) for m≤1:

(1b) mMgO•tQO•SiO₂•xH₂O + R₂CO₃ ⇒ R₂MgSiO₄+(m-1)MgO + t(QO) + CO₂↑ + xH₂O↑

(1c) mMgO•tQO•SiO₂•xH₂O +R₂CO₃ ⇒ mR₂MgSiO₄ +(1-m)R₂SiO₃ + t(QO) + CO₂↑ + xH₂O↑

wherein m is greater than or equal to 1 for reaction (1b) and less than or equal to 1 for reaction (1 c); and Q, t and x are as hereinbefore defined.

The metals "Q" present as minor components may also substitute partially for R, Mg or Si in the silicate compounds produced by the above reactions.

The alkali metal magnesium orthosilicate to magnesium oxide ratio can be adjusted by varying the value of m in the starting materials.

The idealized reactions depicted in equations (1a,b,c) illustrates the production of alkali metal magnesium orthosilicates plus magnesium and/or other oxides and silicates by direct reaction of a stoichiometric (i.e. 1:1 R₂O:SiO₂) mixture of a magnesium silicate and an alkali metal carbonate.

The vertical arrow ↑ indicates that the carbon dioxide gas and water vapour produced by this reaction escapes from the bed and exits with the rest of the exhaust gases. Thus, ideally, the final solid product remaining in the treated pellets is an intimate mixture comprising an alkali metal magnesium orthosilicate (R₂MgSiO₄) and possibly either magnesium oxide (MgO also known as periclase) or alkali metal silicates (R₂SiO₃ as well as other solid products comprising the other metals (Q), especially iron, which may present as magnetite (Fe₃O₄), as haematite (Fe₂O₃) or possibly as an alkali metal ferrite (RFeO₂); calcium, which may be present as silicates; chromium, which may be present as alkali metal chromates (R₂CrO₄); and nickel, which may be present as oxides or silicates.

When the molar ratio of alkali metal carbonate compound, expressed as alkali metal oxide of the formula R₂O, in which R represents an alkali metal, to magnesium silicate, expressed as silicon dioxide, of the formula SiO₂, is about 1, and the value of m is also about 1, the reaction produces an alkali metal magnesium orthosilicate as the principal product. When the value of m is greater than 1, magnesium oxide (MgO) is also produced (as shown in equation 1b). When the value of m is lower than 1, an alkali metal silicate R₂SiO₃ is produced instead of MgO (as shown in equation 1c).

When the molar ratio of alkali metal carbonate compound, expressed as alkali metal oxide of the formula R₂O, in which R represents an alkali metal, to magnesium silicate, expressed as silicon dioxide, of the formula SiO₂, is less than one, the reaction produces the same products as when the ratio is 1, but some unreacted magnesium silicate may remain in the products. When the ratio is greater than 1, the reaction produces the same products as when the ratio is 1, but some unreacted alkali metal carbonate may remain in the product.

The idealized reactions depicted in equations (1a,b,c) illustrate the production of alkali metal magnesium orthosilicates plus magnesium and/or other oxides and silicates by direct reaction of a mixture of a magnesium silicate and an alkali metal carbonate. This type of reaction is very endothermic, mainly due to the liberation of carbon dioxide gas: it consumes about 3.4 kJ (i.e. about 0.8 kcal) of heat per gram of CO₂ liberated. Thus, regardless of the temperature at which the reaction is conducted, there will be a significant net energy consumption for the overall process. However, if the reaction is conducted, as described above, in a furnace system which allows for good counter-current heat exchange between the outgoing hot gases and the incoming solids, and likewise between the outgoing hot solids and the incoming combustion air, the net energy consumption can be reduced to a value close to the theoretical limit given above. It is important, for energy efficiency, to have efficient counter-current heat exchange at both the beginning and the end of the process, incoming and outgoing, for example in a moving grate furnace as described above.

In a further embodiment, the preparation of the alkali metal magnesium orthosilicate is conducted in a system comprising moving grates for pre-heating and cooling and a rotary kiln in a decarbonation step which produces carbon dioxide.

When a moving grate system is used it is important to maintain the solid in the form of suitably-sized pellets so that they form a porous bed on the grate, allowing for the passage of gases. The pellets preferably retain their mechanical integrity; they preferably also maintain their mean size within pre-determined limits.

In order to facilitate maintenance of the mechanical integrity of the pellets either (a) the maximum solids temperature in the process does not substantially exceed the melting point of the alkali metal carbonate corresponding to the alkali metal carbonate compound, and/or (b) the maximum solid volume fraction of melt-forming material (substantially alkali metal carbonate) in the pellets is generally below the value at which the nodule will deform significantly even if the alkali metal carbonate melts. This value is generally below about 35% of the total solids volume. However, since the reaction itself produces no liquid products (only solids and gases) at the temperatures preferably employed, the risk of the nodules deforming significantly due to melting is quite low even at far higher initial volume fractions of alkali metal carbonate as long as the heating occurs slowly enough to allow for a significant degree of reaction to occur before complete melting of the alkali metal carbonate.

The preparation of the alkali metal magnesium orthosilicate may also be conducted in a suspension preheater system comprising a plurality of cyclones in a preheater and, for example, a rotary kiln, for example as used in a typical modern cement plant. The starting materials, for example as a mixed substantially dry powder, are fed (cold) into the top cyclone of the preheater. During its passage through the preheater cyclone tower, by counter-current heat exchange with kiln exit gases, the material is heated close to the melting point of the alkali metal carbonate corresponding to the alkali metal carbonate compound, but without reaching this melting point, in order to avoid, for example, the formation of accretions on the walls of the preheater. At the bottom of the preheater tower, the mixed powder enters a rotary kiln in which, as the temperature rises to the melting point of the alkali metal carbonate, the powder self-nodulizes. The ratio of alkali metal carbonate compound to magnesium silicate and/or the particle size distribution of the magnesium silicate and alkali metal carbonate compound in particulate form is chosen to promote self-nodulization. The nodules are then decarbonated in the rotary kiln. The decarbonated nodules are then cooled, for example on a moving grate cooler also as used in typical modern cement plants. The heat of the hot nodules can be used to preheat the incoming combustion air for the kiln by counter-current heat exchange.

The hydraulic binder of the invention sets and hardens by chemical interaction with water. It is believed that the initial part of the reaction of the binder with water can be written qualitatively as follows, for m≥1 (equation 2a), and m≤1 (equation 2b):

(2a) (m-1)MgO + R₂MgSiO₄ ⇒ (m-1)Mg(OH)₂ + "M-S-H" + 2R⁺ + (OH⁻, H₂SiO₄⁼, CO₃⁼)

(2b) (1-m)R₂SiO₃ + mR₂MgSiO₄ ⇒ "M-S-H" + 2R⁺ + (OH⁻, H₂SiO₄, CO₃⁼)

In the above initial reactions, the main solid compounds produced are an amorphous magnesium silicate hydrate, "M-S-H", of variable composition, plus, in the case where m>1, magnesium hydroxide (brucite). The alkali metals can dissolve in the aqueous phase as alkali metal cations (R⁺), and the charge of these alkali metal cations is essentially balanced by a mixture of three principal dissolved anions: hydroxide (OH⁻), silicate (H₂SiO₄⁼) and carbonate (CO₃⁼), present in various ratios depending on the conditions and materials used. It is to be understood that equations 2(a) and 2(b) are not perfectly balanced equations but rather are simply intended to indicate the main initial products of the reaction between the hydraulic binder of the invention with water. It will also be understood that when phosphoric acid or a water soluble phosphate salt are used with the hydraulic binder of the invention the hardened product will generally comprise insoluble or sparingly soluble magnesium phosphate salts precipitated as a result of the reaction of the products of the above initial reactions with the dissolved phosphoric acid or its salts.

In this specification, including the accompanying claims, percentages unless otherwise indicated are by mass.

The term "pellets" as used in this specification including the accompanying claims is to be understood as embracing shaped, generally substantially spherical, forms such as pellets, nodules and granules.

Blaine specific surface areas are determined by known methods.

Particle size and size distribution when measured by laser granulometry is measured using a Malvern MS2000 laser granulometer. Measurement is effected in ethanol. The light source consists of a red He-Ne laser (632 nm) and a blue diode (466 nm). The optical model is that of Mie and the calculation matrix is of the polydisperse type.

The apparatus is checked before each working session by means of a standard sample (Sifraco C10 silica) for which the particle size distribution is known.

Measurements are performed with the following parameters: pump speed 2300rpm and stirrer speed 800rpm. The sample is introduced in order to establish an obscuration between 10 and 20%. Measurement is effected after stabilisation of the obscuration. Ultrasound at 80% is first applied for 1 minute to ensure the de-agglomeration of the sample. After about 30s (for possible air bubbles to clear), a measurement is carried out for 15s (15000 analysed images). Without emptying the cell, measurement is repeated at least twice to verify the stability of the result and elimination of possible bubbles.

All values given in the description and the specified ranges correspond to average values obtained with ultrasound.

The following non-limiting Examples illustrate the invention.

### EXAMPLE 1

Ground olivine sand of composition (Mg_{0.94}Fe_{0.06})₂SiO₄ was mixed with a sodium carbonate hydrate powder in a 14:11 mass ratio. 25g of this powder was pressed into a pellet and placed into a lab furnace in a platinum crucible. It was heated up to 800°C over 2 hours, maintained at 800°C for 1 hour and cooled back to room temperature by natural cooling. In order to evaluate the reaction efficiency, separate samples of the sodium carbonate and olivine used underwent exactly the same heat treatment. The measured ignition losses are shown in the following Table:

**Table 1**

| Sample | Loss on Ignition |
|---|---|
| Sodium carbonate powder | 14.97 % |
| Ground olivine sand | 0.22 % |
| 14:11 mix of ground olivine sand + sodium carbonate powder | 16.69 % |

The ignition loss of the pure sodium carbonate was due entirely to loss of hydrate water and not to decomposition or evaporation of the carbonate. The pure olivine sample remained essentially unchanged during heat treatment, but the mixed sample reacted. From the measured LOI data, it is estimated that 60% of the CO₂ from the carbonate was lost from the mixture. The phase constitution of the reacted sample was determined by X-ray diffraction. The reaction products observed by this technique were Na₂MgSiO₄, MgO and Fe₂O₃ together with some unreacted olivine and sodium carbonate.

### EXAMPLE 2

The same ground pure olivine sand (Mg_{0.94}Fe_{0.06})₂SiO₄ and sodium carbonate hydrate powder as used in Example 1 were mixed in a 1400:1235 mass ratio. (The molar ratio of this mixture is approximately 1:1). The powder was pressed into pellets and placed (in a platinum crucible) into a lab furnace which was kept at 900°C. The sample was air-quenched after 1h of heat treatment. Separate samples of the sodium carbonate and olivine used underwent an identical heat treatment. It is important to mention that at this temperature, sodium carbonate is in the liquid state. (The melting temperature of this compound is 851°C). The measured loss on ignition of all of the samples is presented in the following Table.

**Table 2**

| Sample | Loss on Ignition |
|---|---|
| Sodium carbonate | 14.96 % |
| Olivine | 0.04 % |
| Olivine + Sodium carbonate | 23.02 % |

From the measured LOI data, a conversion rate (degree of decarbonation) close to 100% was obtained which means that the reaction was essentially complete. The reaction product was analysed by X-ray diffraction and the main phases detected were Na₂MgSiO₄ and MgO together with some un-reacted olivine. No remaining sodium carbonate was detected, in agreement with the observed loss on ignition data. The MgO to Na₂MgSiO₄ mass ratio was estimated by Rietveld analysis of the X-ray diffraction data to be 14:86, in reasonable agreement with mass balance calculations.

### EXAMPLE 3

A crushed sample of serpentine from Horsmanaho, Finland (ground in a ball mill to a powder with 43% passing a 75 micrometre sieve, and containing, by mass, 37.9% silicon expressed as SiO2, 38.7% magnesium expressed as MgO, 7.4% iron expressed as Fe2O3, and with an ignition loss of 14.9% at 950°C), was mixed with anhydrous sodium carbonate powder in a 5355:4645 mass ratio (molar ratio approximately 1:1.3). About 5kg of the mixed powder was pressed into a steel crucible and calcined in a lab furnace at 950°C for 4.5 hours. The mass loss during calcination was 27.9%. From the measured mass loss it can be estimated that the decarbonation reaction was complete. The reaction product was analysed by XRF spectrometry and shown to contain 27.8% silicon expressed as SiO2, 30.4% magnesium expressed as MgO, 5.7% iron expressed as Fe2O3, and 33.4% sodium expressed as Na2O. An XRD analysis showed the major phases present in the product to be Na2MgSiO4 and periclase (MgO)

### EXAMPLE 4

Ground natural talc from Luzenac (France) with nominal composition Mg₃Si₄O₁₀(OH)₂ and containing some minor impurities (1.1% Al₂O₃, 0.9 % Fe₂O₃ and 0.9% CaO by mass) was mixed with anhydrous sodium carbonate (Na₂CO₃) at a 4863:5136 mass ratio (molar ratio approximately 1:1). 20.5g of this powder was pressed into a pellet and placed into a lab furnace in a platinum crucible. The sample was heated at 900°C for 1 hour, followed by cooling in air. It was weighed before and after treatment and the measured loss on ignition of 23.3% was consistent with loss of carbon dioxide from the sodium carbonate plus bound water from the talc; it represents about 95% of the theoretical value for complete reaction of 24.6%. The phase constitution of the reacted sample was determined by X-ray diffraction: the main products detected were Na₂MgSiO₄ and Na₂SiO₃.

### EXAMPLE 5

The product of Example 2 (referred to here as "product X") was ground to a fine powder with a Blaine specific surface area of 430 m²/kg. It was mixed in various proportions with powdered crystalline potassium di-hydrogen phosphate [KH₂PO₄ > 99% pure, obtained from Sigma Life Science, (CAS n° 7778-77-0)]. 100g of each mixed powder sample was mixed with sufficient water to make a workable paste, and the setting behaviour of each paste sample was followed at 20°C. Results are shown in Table 3, below:

**Table 3**

| | product X (g) | KH₂PO₄ (g) | Water (g) | Comments |
|---|---|---|---|---|
| Test 1 | 90 | 10 | 38.1 | Set almost immediately; impossible to cast in mould |
| Test 2 | 95 | 5 | 33.4 | Set in less than 10min., difficult to cast in mould |
| Test 3 | 99 | 1 | 29.3 | Set in about 10min, easy to cast in mould |
| Test 4 | 99 | 1 | 31.3 | Set in about 10min, easy to cast in mould |

All of the paste samples set in 10 minutes or less, but the first sample set so quickly that it was impossible to cast it into moulds to make shaped specimens. The second sample began to set quickly but it was nevertheless possible to cast 2x2x10cm paste prisms from it. These prisms were demoulded after two hours storage in moist air at 20°C, and tested in compression, giving an average compressive strength of 2MPa.

## Claims

1. A hydraulic binder comprising an alkali metal magnesium orthosilicate of the general formula R₂MgSiO₄wherein R represents an alkali metal.

2. A hydraulic binder according to claim 1 which also comprises magnesium oxide.

3. A hydraulic binder according to claim 1 which also comprises an alkali metal silicate (R₂SiO₃ wherein R is as defined in claim 1).

4. A hydraulic binder according to claim 1, 2 or 3 which also comprises a water soluble phosphate salt.

5. A hydraulic binder according to any one of the preceding claims in particulate form.

6. A hydraulic binder according to any one of the preceding claims in which the alkali metal magnesium orthosilicate is prepared by the reaction of an alkali metal carbonate compound, which compound is an alkali metal carbonate, an alkali metal bicarbonate or a mixture thereof, with a magnesium silicate.

7. A hydraulic binder according to any one of the preceding claims in which the alkali metal magnesium orthosilicate is prepared by the reaction, at a temperature from 500 to 1200°C, of an alkali metal carbonate compound which compound is an alkali metal carbonate, an alkali metal bicarbonate or a mixture thereof, with a magnesium silicate comprising mMgO.SiO₂, the molar ratio of alkali metal carbonate compound, expressed as alkali metal oxide of the formula R₂O, in which R represents an alkali metal, to magnesium silicate, expressed as silicon dioxide of the formula SiO₂, being from 4:1 to 1:4, which reaction produces an alkali metal magnesium orthosilicate.

8. A hydraulic binder according to any one of the preceding claims which also comprises an additive to promote setting and hardening.

9. A hydraulic composition comprising a hydraulic binder according to any one of the preceding claims.

10. A hydraulic composition according to claim 9 which is a paste, mortar or concrete.

11. A product in shaped form comprising a hydraulic binder according to any one of the preceding claims.
